# EUROPEAN PATENT APPLICATION

(11) **EP 3 537 570 A1**
(43) Date of publication of application: **11.09.2019**
(21) Application number: 18160701.1
(22) Date of filing: 08.03.2018
(51) Int. Cl.: H02K 1/20, H02K 7/18

(54) **SPACERS FOR A STATOR OF AN ELECTRICAL GENERATOR**

(71) Applicant: Siemens Gamesa Renewable Energy A/S, 7330 Brande (DK)
(72) Inventor: RafieeArashtnab, Mahsa, 7330 Brande (DK); Soerensen, Peter Hessellund, 8740 Brædstrup (DK)
(74) Representative: Aspacher, Karl-Georg

(57) **Abstract**

A Stator (20) for an electrical generator (11) comprises a frame body (21) longitudinally extending along a longitudinal axis (Y) of the stator (20) and including a stator yoke (22) and a plurality of teeth (33) protruding according to a radial direction orthogonal to the longitudinal axis (Y) from the stator yoke (22), the frame body (21) including a plurality of stator axial segments (34), two adjacent stator axial segments (34) being separated by a cooling duct (35) for letting a cooling fluid flow in the cooling duct (35), at least one spacer (40) being provided in the cooling duct (35) for axially connecting the two adjacent tooth axial segments (34). The spacer (40) comprises:
- at least one tooth portion (40a) extending radially along a tooth (33) of the stator (20) and
- at least one yoke portion (40b) in the stator yoke (22) inclined or curved with respect to the tooth portion (40a) of the spacer (40).

## Description

### Field of invention

The present invention relates to a stator for an electrical generator. Particularly, but not exclusively, the present invention may be efficiently applied to an electrical permanent magnet generator of a wind turbine.

### Art Background

An electrical generator, such as an electric generator installed in a wind turbine, typically comprises a rotor which rotates relative to a stator.

The stator normally comprises a frame body longitudinally extending along a longitudinal axis and including a stator yoke and a plurality of teeth protruding according to a radial direction from the stator yoke to respective tooth radial ends. Each tooth extends also longitudinally between a first tooth longitudinal end and a second tooth longitudinal end. In the stator a plurality of slots are also defined, each slot being delimited circumferentially by two adjacent teeth and radially extending between the stator yoke and the respective tooth radial ends. Each slot houses a respective winding.

The stator and the windings are generally cooled by blowing air inside the stator, e.g. by blowing air through the windings and through an air gap between a rotor of the generator and the stator or through radial extending ducts within the stator.

The stator housing may consist of a plurality of stator lamination sheets which are attached one after another along the axial direction of the stator and form a stator stack of the stator. Axial gaps along the stator stack may be provided to form cooling ducts. To form such cooling ducts spacers are inserted between two adjacent laminated sheets and welded thereto. A cooling fluid, typically air, may stream through the duct prevalently along a radial direction of the generator. The cooling fluid streaming through the cooling ducts, heat dissipated in the stator may be transferred to the cooling fluid and may be transported away from the stator.

Each spacer typically extends radially along a respective cooling duct of the stator. The cooling fluid flows along the spacer and comes out as high speed jet from the tooth expanding out of the stator in the air gap between the rotor and the stator. According to known-in-the-art solution, the shape of the spacer is not optimized in order to provide a maximum cooling effect. In particular the most radially inner portion of the spacer, located in the stator yoke or proximal thereto is not effective for cooling, being the flow speed of the cooling fluid at the stator yoke very low, close to zero.

Therefore, there is still a need to provide an improved design for the spacers in a stator of an electrical generator, which optimizes or improves the cooling effect of the cooling fluid circulated along the spacers in the cooling ducts of the stator.

### Summary of the invention

This need may be met by the subject matter according to the independent claim. Advantageous embodiments of the present invention are described by the dependent claims.

According to the present invention, it is provided a stator for an electrical generator comprising a frame body longitudinally extending along a longitudinal axis of the stator and including a stator yoke and a plurality of teeth protruding according to a radial direction orthogonal to the longitudinal axis from the stator yoke, the frame body including a plurality of stator axial segments, two adjacent stator axial segments being separated by a cooling duct for letting a cooling fluid flow in the cooling duct, at least one spacer being provided in the cooling duct for axially connecting the two adjacent tooth axial segments. The spacer comprises:
- at least one tooth portion extending radially along a tooth of the stator and
- at least one yoke portion in the stator yoke inclined or curved with respect to the tooth portion of the spacer.

The above described electric generator including the stator of the present invention may be advantageously integrated in a wind turbine.

Advantageously, the spacer of the present invention allows efficiently inclining or curving the yoke portion of the spacer with respect to the tooth portion to increase the turbulences in the yoke area and to achieve a better cooling performance for the generator in the axial cooling gaps.

According to embodiments of the invention, the yoke portion of the spacer is inclined with respect to the tooth portion of a spacer angle comprised between 90 degree and 180 degree.

In particular, the yoke portion may be orthogonal to the tooth portion.

According to embodiments of the invention, the spacer comprises a plurality of yoke portions. Such plurality of yoke portions may be orthogonal to the tooth portion or inclined with respect to the tooth portion.

According to embodiments of the invention, the yoke portion includes at least an airfoil profile. In particular, according to one embodiment of the invention, the spacer may comprise two yoke portions having an airfoil profile, symmetrically disposed with respect to the tooth portion. Alternatively, according to another embodiment of the invention, the spacer may comprise two yoke portions having an airfoil profile, parallel disposed with respect to each other.

According to embodiments of the invention, the spacer comprises two or more yoke portions connected in series to each other being inclined with respect to the tooth portion and to each other, one of the yoke portions being connected to the tooth portion.

According to an embodiment of the invention, the yoke portion has the shape of a curved appendix extending from the tooth portion in the stator yoke.

Other embodiments of the present invention may derive from modification or combinations of the above described embodiments.

In all embodiments the yoke portion of the spacer inclined or curved with respect to the tooth portion achieves a better cooling performance for the generator in the axial cooling gaps, with respect to the prior art solutions where the spacer extends straight in the cooling duct according to one single direction, in particular a radial direction.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine including an electrical generator with a stator according to the present invention.
- Figure 2: shows a partial axonometric view of a stator for an electrical generator according to the present invention.
- Figure 3: shows a frontal view of a portion of a stator for an electrical generator according to the prior art.
- Figure 4: shows a frontal view of a portion of a stator for an electrical generator according to a first embodiment of the present invention.
- Figure 5: shows a frontal view of a portion of a stator for an electrical generator according to a second embodiment of the present invention.
- Figure 6: shows a frontal view of a portion of a stator for an electrical generator according to a third embodiment of the present invention.
- Figure 7: shows a frontal view of a portion of a stator for an electrical generator according to a fourth embodiment of the present invention.
- Figure 8: shows a frontal view of a portion of a stator for an electrical generator according to a fifth embodiment of the present invention.
- Figure 9: shows a frontal view of a portion of a stator for an electrical generator according to a sixth embodiment of the present invention.

### Detailed Description

The illustrations in the drawings are schematic. It is noted that in different figures, similar or identical elements are provided with the same reference signs.

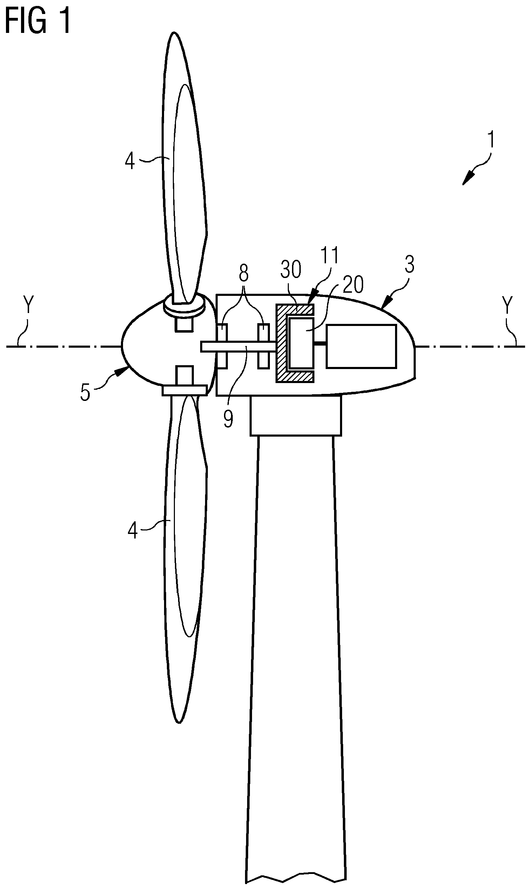

**Figure 1** shows a wind turbine 1 according to the invention. The wind turbine 1 comprises a tower 2, which is mounted on a non-depicted foundation. A nacelle 3 is arranged on top of the tower 2.
The wind turbine 1 further comprises a wind rotor 5 having at least one blade 4 (in the embodiment of Figure 1, the wind rotor comprises three blades 4, of which only two blades 4 are visible). The wind rotor 5 is rotatable around a rotational axis Y.
The blades 4 extend substantially radially with respect to the rotational axis Y.
In general, when not differently specified, the terms axial, radial and circumferential in the following are made with reference to the rotational axis Y.
The wind turbine 1 comprises an electric generator 11, including a stator 20 and a rotor 30. The rotor 30 is rotatable with respect to the stator 20 about the rotational axis Y. The wind rotor 5 is rotationally coupled with the electric generator 11 either directly, e.g. direct drive or by means of a rotatable main shaft 9 and/or through a gear box (not shown in Figure 1). A schematically depicted bearing assembly 8 is provided in order to hold in place the main shaft 9 and the rotor 5. The rotatable main shaft 9 extends along the rotational axis Y.

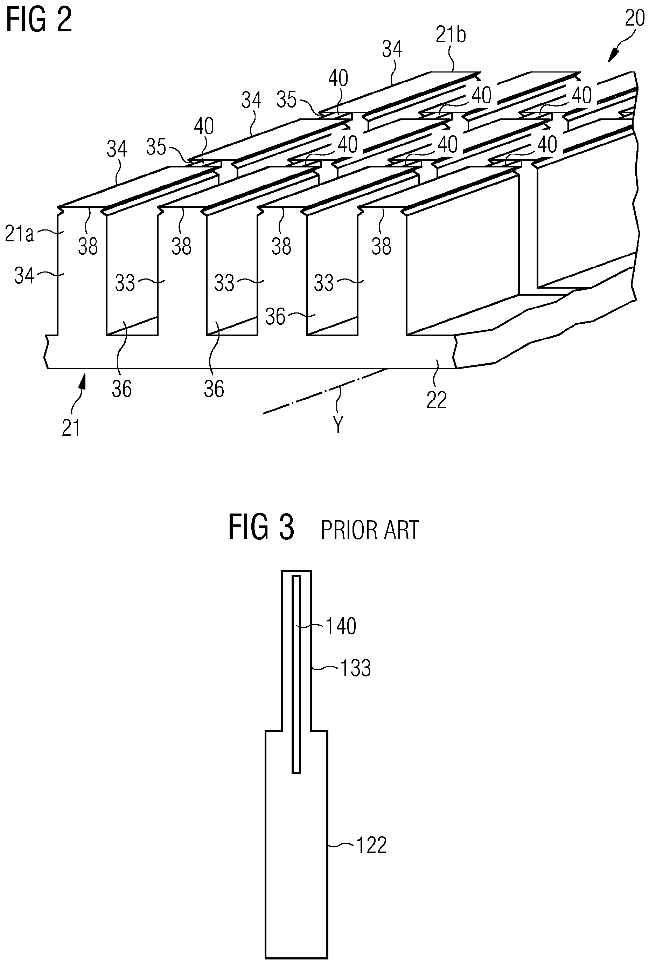

**Figure 2** shows more in detail the stator 20 comprising a frame body 21, which has a conventional lamination structure including a stator yoke 22 and a plurality of teeth 33 protruding according to a radial direction orthogonal to the longitudinal axis Y from the stator yoke 22, up to respective tooth radial ends 38.
Each tooth 33 is delimited by two respective lateral surfaces 34, radially oriented, and by a respective circumferential surface 38a, at the respective tooth radial end 38, circumferentially connecting the two respective lateral surfaces 34.
Each tooth 33 extends longitudinally between a first tooth longitudinal end 21a and a second tooth longitudinal end 21b.

The frame body 21 of the stator 20 further includes a plurality of slots 36, each slots being circumferential delimited by a pair of circumferentially adjacent teeth 33. Each slot 30 houses a respective winding (not shown in Figure 2).
The frame body 21 includes a plurality of stator axial segments 34, two adjacent stator axial segments 34 being separated by a cooling duct 35 for letting a cooling fluid flow in the cooling duct 35, according to a main radial direction oriented from stator yoke 22 to the tooth radial ends 38.
For each tooth 33, the frame body 21 includes a spacer 40 provided in each cooling duct 35 for axially connecting the two adjacent tooth axial segments 34.

**Figure 3** shows an arrangement of tooth 133, stator yoke 122 and spacer 140, according to the prior art. The spacer 140 extends straight in the cooling duct 35 according to the radial direction. The spacer 140 extends radially along the tooth 133 and partially along the stator yoke 122.
According to the present invention, instead, each spacer 40 comprises at least one tooth portion 40a extending radially along a tooth 33 of the stator 20 and at least one yoke portion 40b in the stator yoke 22 inclined or curved with respect to the tooth portion 40a.

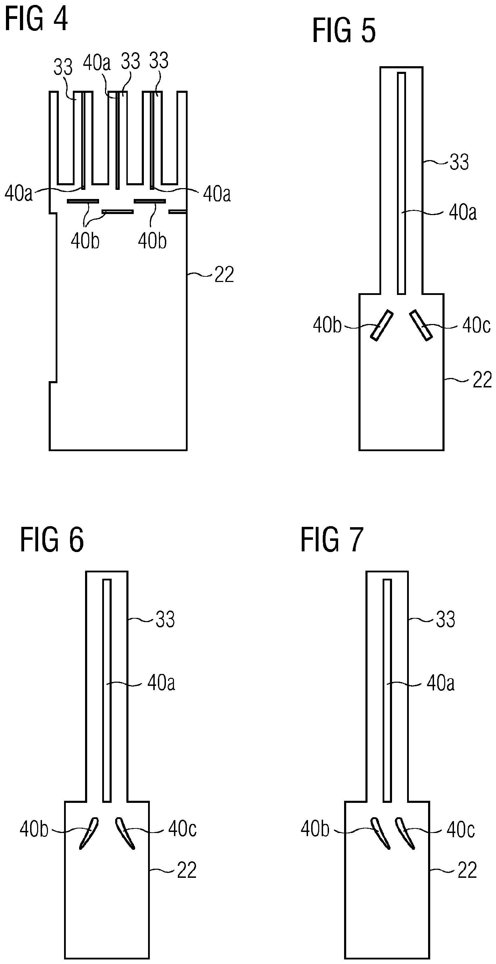

**Figure 4** shows a first embodiment including three teeth 33, a stator yoke 22 and three spacers 40 (one spacer 40 for each tooth 33), according to the present invention. In such embodiment, each spacer 40 includes one tooth portion 40a and one yoke portion 40b. The yoke portion 40b is orthogonal to the tooth portion 40a. Tooth portion 40a and yoke portion 40b are separated from each other.
In other embodiments, the yoke portion 40b is inclined with respect to the tooth portion 40a of a spacer angle comprised between 90 degrees and 180 degrees.

**Figure 5** shows a second embodiment including one tooth 33, a stator yoke 22 and one spacer 40, according to the present invention. In such embodiment, each spacer 40 includes one tooth portion 40a and two yoke portions 40b, 40c.

Two yoke portions 40b, 40c are symmetrically disposed with respect to the tooth portion 40a. Tooth portion 40a and yoke portions 40b, 40c are separated from each other.

**Figure 6** shows a third embodiment of the spacer 40, differentiating from the second embodiment above described in that each yoke portion 40b, 40c includes an airfoil profile.

**Figure 7** shows a fourth embodiment of the spacer 40, differentiating from the third embodiment above described in that the two yoke portion 40b, 40c, each including an airfoil profile, are parallel disposed with respect to each other.

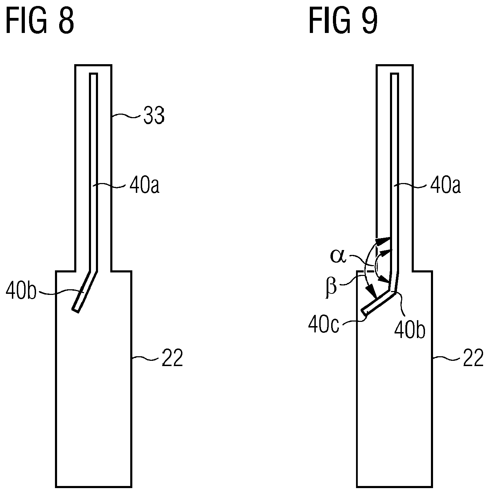

**Figure 8** shows a fifth embodiment including one tooth 33, a stator yoke 22 and one spacer 40 for each tooth 33, according to the present invention. In such embodiment, each spacer 40 includes one tooth portion 40a and one yoke portion 40b. The yoke portion 40b is inclined with respect to the tooth portion 40a and attached thereto. Tooth portion 40a and yoke portion 40b are inclined with respect to each other of an angle comprised between 90 degrees and 180 degrees.

**Figure 9** shows a sixth embodiment similar to the fifth embodiment above described, but where each spacer 40 includes one tooth portion 40a and two yoke portions 40b, 40c. The two yoke portions 40b, 40c are inclined with respect to the tooth portion 40a and to each other. One first yoke portion 40b is connected to the tooth portion 40a and inclined with respect thereto of a first angle α comprised between 90 degrees and 180 degrees. The other yoke portion 40b is connected to the first yoke portion 40b and inclined with respect to the tooth portion 40a of a second angle β comprised between 90 degrees and 180 degrees, the second angle β being lower than the first angle α.

According to other embodiments (not shown), each spacer 40 includes one tooth portion and more than two yoke portions, connected in series similarly as descried as shown with reference to the sixth embodiment.

According to another embodiments (not shown), each spacer 40 includes one tooth portion and one or more yoke portion having the shape of a curved appendix extending from a respective tooth 33 in the stator yoke 22. In such embodiment, the yoke portions may be attached to or separated from the respective tooth portion 40a.

## Claims

1. Stator (20) for an electrical generator (11) comprising a frame body (21) longitudinally extending along a longitudinal axis (Y) of the stator (20) and including a stator yoke (22) and a plurality of teeth (33) protruding according to a radial direction orthogonal to the longitudinal axis (Y) from the stator yoke (22), the frame body (21) including a plurality of stator axial segments (34), two adjacent stator axial segments (34) being separated by a cooling duct (35) for letting a cooling fluid flow in the cooling duct (35), at least one spacer (40) being provided in the cooling duct (35) for axially connecting the two adjacent tooth axial segments (34),
wherein the spacer (40) comprises:
- at least one tooth portion (40a) extending radially along a tooth (33) of the stator (20) and
- at least one yoke portion (40b) in the stator yoke (22) inclined or curved with respect to the tooth portion (40a) of the spacer (40).

2. Stator (20) as claimed in claim 1, wherein the yoke portion (40b) is inclined with respect to the tooth portion (40a) of a spacer angle comprised between 90 degree and 180 degree.

3. Stator (20) as claimed in claim 1, wherein the yoke portion (40b) is orthogonal to the tooth portion (40a).

4. Stator (20) as claimed in claim 1, 2 or 3, wherein the spacer (40) comprises at least two yoke portions (40b, 40c).

5. Stator (20) as claimed in claim 2 or 4, wherein the yoke portion (40b) includes at least an airfoil profile.

6. Stator (20) as claimed in claim 5, wherein the spacer (40) comprises two yoke portions (40b, 40c) having an airfoil profile, symmetrically disposed with respect to the tooth portion (40a).

7. Stator (20) as claimed in claim 5, wherein the spacer (40) comprises two yoke portions (40b, 40c) having an airfoil profile, parallel disposed with respect to each other.

8. Stator (20) as claimed in claim 4, the two yoke portions (40b, 40c) being inclined with respect to the tooth portion (40a) and to each other.

9. Stator (20) as claimed in any of the previous claims 1 to 8, wherein the at least one tooth portion (40a) and the at least one yoke portion (40b) are connected to each other.

10. Stator (20) as claimed in any of the previous claims 1 to 8, wherein the at least one tooth portion (40a) and the at least one yoke portion (40b) are separated from each other.

11. Electrical generator (11) comprising a stator (20) according to any of the previous claims.

12. Wind turbine comprising an electrical generator (11) according to the previous claim 11.
